(19) Europäisches Patentamt

European Patent Office

Office européen des brevets

(11) Veröffentlichungsnummer: **0 461 469 A2**

# (12) EUROPÄISCHE PATENTANMELDUNG

(21) Anmeldenummer: 91108741.9

(22) Anmeldetag: 28.05.91

(51) Int. Cl.5: **B60C** 11/14, C08K 7/18, C08K 3/14, C08L 21/00

(30) Priorität: 31.05.90 CH 1850/90

(43) Veröffentlichungstag der Anmeldung: 18.12.91 Patentblatt 91/51

(84) Benannte Vertragsstaaten: AT BE CH DE DK ES FR GB IT LI LU NL SE

(71) Anmelder: LONZA AG

Gampel/Wallis(CH)

(72) Erfinder: Dr. Kunz, Reiner

Königsbergerstr.33
Waldshut-Tiengen(DE)
Erfinder: Strittmatter, Rudolf
Zelgweg 13
Waldshut-Tiengen(DE)

(74) Vertreter: Weinhold, Peter, Dr. et al
Patentanwälte Dipl.-Ing. G. Dannenberg Dr.
P. Weinhold Dr. D. Gudel Dipl.-Ing. S.
Schubert Dr. P. Barz Siegfriedstrasse 8
W-8000 München 40(DE)

(54) **Verbundmaterial mit Hartstoffpartikeln.**

(57) Verbundmaterialien, bestehend aus einer Elastomermatrix, insbesondere auf Kautschukbasis, und eingelagerten abgerundeten, kantenfreien und mit einem Haftvermittler beschichteten Hartstoffpartikeln, weisen eine grosse Verschleissbeständigkeit und eine gute Rutschfestigkeit auf glatten Flächen auf. Sie eignen sich insbesondere für die Verwendung in der Lauffläche von Fahrzeugreifen.

Weiter wird ein Verfahren zur Herstellung von abgerundeten, kantenfreien und druckfesten Hartstoffpartikeln durch mechanische Behandlung beliebig geformter Ausgangspartikel beschrieben.

Abbildung 3

6905 25K 1mm

Die Erfindung betrifft ein Verbundmaterial aus einer Elastomermatrix mit eingebetteten Hartstoffpartikeln, dessen Verwendung zur Uebertragung von Reibungskräften, insbesondere in der Lauffläche von Fahrzeugreifen, sowie die hierzu erforderlichen abgerundeten druckfesten Hartstoffpartikel und ein Verfahren zu deren Herstellung.

Elastomermaterialien, insbesondere solche auf Basis von Natur- und/oder Synthesekautschuk, werden aufgrund ihrer besonderen mechanischen Eigenschaften in der Technik in grossem Umfang zur Uebertragung von Reibungskräften verwendet. Die mengenmässig bedeutendste Verwendung ist die zur Herstellung von Fahrzeugreifen aller Art, insbesondere für Kraftfahrzeuge. Die Lauffläche dieser Fahrzeugreifen muss dabei nicht nur das Gewicht des Fahrzeugs, sondern vor allem auch die Antriebs-, Brems- und Seitenkräfte zuverlässig auf die Fahrbahn übertragen. Qualität und Beschaffenheit der Fahrbahn können dabei ganz erheblich variieren und die Kraftübertragung dadurch im Einzelfall mehr oder weniger stark beeinträchtigen. Die grössten Schwierigkeiten treten in der Regel dann auf, wenn die Fahrbahn mit Eis oder Schnee bedeckt ist oder aus einem Material mit glatter Oberfläche, wie beispielsweise Basalt oder Granit, besteht und mit einem Wasserfilm, womöglich noch mit schmierenden Beimengungen, überzogen ist.

In begrenztem Umfang kann eine verbesserte Haftreibung auf vereister oder nasser Fahrbahn durch Anpassung der Elastomermischung und des Laufflächenprofils an diese besonderen Bedingungen erreicht werden. Insbesondere die erstgenannte Massnahme verschlechtert aber im allgemeinen das Verschleissverhalten, verringert also die erreichbare Laufleistung.

Eine erhebliche Verbesserung der Haftung auf Eis konnte dadurch erreicht werden, dass in die Lauffläche der Reifen Hartmetallstifte (sog. Spikes) eingesetzt wurden, deren eines Ende jeweils geringfügig aus der Oberfläche herausragte und sich beim Abrollen des Reifens auf Eis in dieses hineindrückte und so gewissermassen für einen Augenblick eine formschlüssige Verbindung erzeugte. Diese technische Lösung wies jedoch so schwerwiegende Nachteile auf, dass die Verwendung derartiger Reifen auf öffentlichen Strassen in den meisten Staaten nach wenigen Jahren verboten wurde. Die Hartmetallstifte besitzen nämlich eine relativ grosse Masse. Dies führt zum einen dazu, dass sie sich bei hohen Rotationsgeschwindigkeiten des Rades lösen können und dann unkontrolliert herumfliegen und Personen- und Sachschäden hervorrufen können. Vor allem aber wirken die Stifte schon bei mässigen Geschwindigkeiten wie Meissel auf die Fahrbahnoberfläche ein und führen dort zu einem unvertretbar hohen Verschleiss.

Es hat in der Vergangenheit auch nicht an Vorschlägen gefehlt, die Haftreibung von Fahrzeugreifen durch einfaches Beimischen von Hartstoffpartikeln, wie beispielsweise Korund- oder Siliciumcarbid-Schleifkorn, in die Kautschukmischung der Lauffläche zu verbessern.

So wird beispielsweise in der FR-PS 1 365 406 aus dem Jahre 1964 vorgeschlagen, in die Lauffläche oder Teile davon Schleifkörner aus Korund, Siliciumcarbid, Borcarbid, Schmirgel, Aluminiumoxid, Quarz etc. einzuarbeiten.

Diese auf den ersten Blick einfach erscheinende Massnahme führte jedoch nicht zu den erhofften Resultaten. Zunächst sind diese Hartstoffpartikel nicht mit der Kautschukmischung verträglich, d.h. die Haftung zwischen Hartstoff und Kautschuk ist so gering, dass die Partikel, wenn sie erst einmal an der Oberfläche der Lauffläche liegen - und nur dort können sie die gewünschte Wirkung entfalten - durch die mechanische Krafteinwirkung sehr schnell aus dem Materialverbund herausgerissen und damit wirkungslos werden. Durch eine entsprechende Oberflächenbeschichtung der Partikel konnte dieses Teilproblem in befriedigender Weise gelöst werden. Eine solche Beschichtung ist in der veröffentlichten PCT-Anmeldung WO 89/06670 beschrieben. Die Erprobung von Fahrzeugreifen, welche unter Verwendung derart beschichteter Hartstoffpartikel hergestellt wurden, zeigte allerdings, dass eine gute Haftung zwischen Hartstoff und Kautschukmischung allein noch keine ausreichende Lebensdauer der Reifen sicherstellt. Einerseits zerschneiden die scharfen Kanten der Partikel mit der Zeit durch die Walkbeanspruchung der Lauffläche den Kautschuk und beginnen zu wandern, was im günstigsten Fall nur zum Verlust der Partikel führt. Gravierender sind die Folgen, wenn einzelne Partikel nach innen wandern, denn dies kann zur allmählichen Zerstörung, und insbesondere bei schlauchlosen Luftreifen zum Undichtwerden oder sogar zum Platzen des Reifens führen. Durch die ständige Schlagbeanspruchung beim Auftreffen auf die Fahrbahnoberfläche werden zudem insbesondere solche Partikel, die Fehlstellen, wie grosse Poren, Einschlüsse, Risse, Korngrenzen oder grössere Kristallbaufehler, aufweisen, leicht zertrümmert. Die entstehenden Trümmerstücke weisen in der Regel besonders scharfe Kanten auf und sind an den neuen Bruchflächen nicht mit der haftvermittelnden Beschichtung versehen, so dass sie die vorstehend genannten Probleme noch vergrössern.

Aufgabe der vorliegenden Erfindung war daher, ein Verbundmaterial aus einer Elastomermatrix, insbesondere auf Kautschukbasis, mit eingebetteten Hartstoffpartikeln zur Verfügung zu stellen, welches die genannten Nachteile nicht aufweist, einfach und kostengünstig herstellbar ist und sich insbesondere für die Verwendung in Fahrzeugreifen eignet.

Erfindungsgemäss wird diese Aufgabe durch das Verbundmaterial nach Anspruch 1 und die Hartstoffpartikel nach Anspruch 14 gelöst.

Es wurde überraschend gefunden, dass die Eigenschaften, insbesondere die Lebensdauer, der aus dem Stand der Technik bekannten Verbundmaterialien aus einer Elastomermatrix mit eingebetteten Hartstoffpartikeln erheblich verbessert werden können, indem Hartstoffpartikel verwendet werden, welche im wesentlichen frei von scharfen Kanten sind und eine abgerundete Form besitzen. Im wesentlichen frei von scharfen Kanten bedeutet hierbei, dass im wesentlichen keine konvexen Kanten vorhanden sind, welche von sich spitzwinklig schneidenden Flächen gebildet werden und der Krümmungsradius der verbleibenden Ecken und Kanten möglichst gross, vorzugsweise wenigstens 20% des Teilchendurchmessers ist. Idealerweise haben die Partikel annähernd Kugel- oder Ellipsoidform. Werden die Partikel ausgehend von unregelmässig geformten Teilchen, wie sie beispielsweise durch Brechen von grobstückigem Material erhalten werden, hergestellt, so lässt sich diese Idealform nicht vollständig erreichen. Der Abrundungsgrad von unregelmässig geformten Teilchen ist trotz der unmittelbaren Anschaulichkeit des Begriffs "Rundheit" nur schwierig quantitativ zu beschreiben. Eine Einführung in diese Problematik geben beispielsweise M.H.Pahl, G.Schädel und H.Rumpf in AufbereitungsTechnik 1973, S.759-764. Obwohl es einige exakt definierte Rundheitsmasse gibt, haben sich diese wegen des hohen Aufwands, der zu ihrer Bestimmung im Einzelfall erforderlich ist, in der Praxis nicht durchsetzen können. Eine für die meisten praktischen Erfordernisse ausreichende und einfach durchzuführende und daher sehr verbreitete Methode ist diejenige nach Krumbein, die auf visuellen Vergleich der zu untersuchenden Teilchen, gegebenenfalls in entsprechender Vergrösserung, mit Standardbildern exakt bestimmter Rundheit beruht (W.C. Krumbein, "J. Sediment. Petrol.", 11 (1941), S. 64-72). Dieses Verfahren ist allerdings bei abgerundeten und nachträglich zerbrochenen Partikeln, die trotz einer weitgehend gerundeten Oberfläche einige scharfe Kanten im Bereich der Bruchfläche besitzen, nicht ganz befriedigend.

Die erfindungsgemäss verwendeten Hartstoffpartikel werden daher vorteilhaft durch ihre Rundheit nach Krumbein charakterisiert, mit der zusätzlichen Massgabe, dass sie wie oben beschrieben keine scharfen Bruchkanten aufweisen.

Zweckmässig weisen wenigstens 90% der Gesamtmasse der Partikel eine Rundheit nach Krumbein von wenigstens 0,3 auf, vorzugsweise wenigstens 80% eine Rundheit von wenigstens 0,5. Ganz besonders bevorzugt sind Partikel mit einer Rundheit von 0,6 und grösser.

Erfindungsgemäss können Hartstoffpartikel mit den erforderlichen Eigenschaften dadurch hergestellt werden, dass Hartstoffpartikel beliebiger Form einer mechanischen Behandlung unterzogen werden, welche den Partikeln eine abgerundete, im wesentlichen kantenfreie Oberfläche gibt und gleichzeitig solche Partikel, die gröbere Gefügefehler wie Poren, Einschlüsse, Risse und dergleichen aufweisen, eliminiert.

Erfindungsgemäss wird dies dadurch erreicht, dass die Partikel, die zunächst herstellungsbedingt meistens eine unregelmässige Form mit scharfen Kanten aufweisen, insbesondere wenn sie durch Brechen von grobem Material gewonnen werden, einer intensiven Reib- und Schlagbeanspruchung in einem flüssigen Medium unterzogen werden.

Vorteilhaft werden die Partikel zu diesem Zweck in einer Rührwerksmühle, einer Ringspaltmühle oder einem Attritor oder einer ähnlichen Vorrichtung behandelt. Diese Vorrichtungen sind an sich bekannt, sie werden üblicherweise mit Mahlkörpern beschickt und zum Feinstmahlen oder auch zum Desagglomerieren, beispielsweise von keramischen Pulvern oder Pigmenten, benutzt.

Für das erfindungsgemässe Verfahren sind keine Mahlkörper erforderlich; vorzugsweise wird es ohne Mahlkörper durchgeführt, so dass die zu behandelnden Partikel selbst gegeneinander schlagen und reiben. Hierdurch werden die Partikel nicht nur abgerundet, sondern erhalten auch eine mikroskopisch aufgerauhte Oberfläche, die die Haftung in der Elastomermatrix begünstigt. Ausserdem werden Partikel mit unzureichender Festigkeit dabei zu kleineren Bruchstücken zerschlagen, die sich zusammen mit dem Abrieb der übrigen Partikel nach Abschluss der Behandlung leicht durch Sieben oder Sedimentieren abtrennen und anderweitig verwerten lassen. Die Behandlung wird vorzugsweise derart durchgeführt, dass die Partikel in der Rührwerksmühle oder dem Attritor im Ruhezustand von der Flüssigkeit gerade bedeckt sind.

Als Flüssigkeit wird vorzugsweise Wasser eingesetzt, das nicht nur billig ist, sondern auch eine günstige Viskosität und eine hohe Wärmekapazität aufweist.

Besonders vorteilhaft werden die Partikel in einem vorhergehenden Schritt teilweise abgerundet, so dass bei dem erfindungsgemässen Verfahren weniger Abrieb anfällt und die Behandlungsdauer verkürzt werden kann. Eine solche teilweise Abrundung, bei der im wesentlichen nur vorstehende Kanten und Ecken gebrochen werden, ist beispielsweise nach dem in der EP-PS 0 082 816 beschriebenen Verfahren durchführbar.

Als Hartstoffpartikel eignen sich grundsätzlich alle Materialien, die eine genügende Härte besitzen und nicht zu spröde sind. Hierunter fallen im wesentlichen Oxide, Carbide, Nitride und Boride von Metallen oder

3

Halbmetallen oder Mischungen solcher Verbindungen untereinander oder mit Metallen (Cermets). Dazu zählen beispielsweise Aluminiumoxid (Korund), Aluminiumoxid/Zirkonoxid (Zirkonkorund), Siliciumcarbid, Borcarbid, Titancarbid, Tantalcarbid, Wolframcarbid, Siliciumnitrid, Titannitrid, Tantalnitrid, Bornitrid und Titanborid. Die Verbindungen können in reiner Form vorliegen oder übliche Verunreinigungen und/oder Hilfsstoffe, wie Sinterhilfsmittel oder Bindemittel, enthalten.

Insbesondere eignet sich das erfindungsgemässe Verfahren für solche Hartstoffe, die herstellungsbedingt als erstarrte Schmelzen oder grobe Kristallmassen anfallen, wie beispielsweise Korund und Zirkonkorund oder Siliciumcarbid, weil diese Stoffe nach der erforderlichen Zerkleinerung besonders unregelmässige und scharfkantige Partikel ergeben.

Erfindungsgemäss verwendbare abgerundete Hartstoffpartikel können auch durch aufbauende Verfahren, beispielsweise durch Granulieren und Sintern von keramischen Pulvern, gegebenenfalls mit Zusätzen von Sinterhilfsmitteln und/oder temporären und/oder permanenten Bindemitteln, oder durch Trocknen und Sintern von Gelperlen hergestellt werden. Solche Verfahren sind an sich bekannt.

Die erfindungemäss abgerundeten Hartstoffpartikel werden vor der Einarbeitung in eine Elastomermatrix zweckmässig auf an sich bekannte Weise mit einem Ueberzug versehen, der ein- oder mehrschichtig aufgebaut sein kann. Dabei kann es von Vorteil sein, wenn ihre Oberfläche nicht absolut glatt ist, sondern eine mikroskopische Rauhigkeit aufweist und so die Haftung des Ueberzugs begünstigt.

Für die Einarbeitung in eine Matrix auf Kautschukbasis, wie sie zur Herstellung von Fahrzeugreifen Verwendung findet, eignen sich insbesondere die mehrschichtigen Ueberzüge, welche in der veröffentlichten PCT-Patentanmeldung WO 89/06670 beschrieben sind.

Die Einarbeitung der beschichteten Hartstoffpartikel in das Material der Elastomermatrix erfolgt auf an sich bekannte Weise, beispielsweise durch Mischen und Kneten. Hierbei ist die abgerundete Form der Partikel ebenfalls von Vorteil, da die verwendeten Vorrichtungen im Vergleich zu scharfkantigen Partikeln einem erheblich geringeren Verschleiss unterworfen werden.

Die verwendeten Vorrichtungen können jedoch die einsetzbare Partikelgrösse nach oben begrenzen. Wird beispielsweise ein Kalander oder Walzenstuhl benutzt, so sollte das Verhältnis Walzenspaltbreite:Partikelgrösse grösser als 2:1, vorzugsweise grösser als 2,5:1 sein, um ein Zerdrücken der Partikel und/oder Beschädigung der Walzen zu verhindern.

Ausserdem sollten bei der Reifenherstellung die Partikel kleiner als die Details der Pressformen sein, um Beschädigungen der Form oder Verklemmen von Partikeln in Spalten und Schlitzen zu verhindern.

Ausser der Verwendung der erfindungsgemässen Hartstoffpartikel in der Lauffläche von Fahrzeugreifen aller Art, wobei unter dem Begriff Fahrzeug in diesem Zusammenhang beispielsweise auch Flugzeuge oder auf elastisch bereiften Rädern oder Ketten mit elastischen Auflagen bewegliche Maschinen zu verstehen sind, liegen jedoch auch alle anderen Verwendungen, bei denen durch einen Gegenstand auf Elastomerbasis Reibungskräfte übertragen werden, im Rahmen der Erfindung. Hierzu zählen beispielsweise Schuhsohlen, Förderbänder, rutschfeste elastische Fussböden oder Auskleidungen, wie Ladeflächen von Transportmitteln, rutschfeste Unterlagen für ortsfeste Gegenstände wie Möbel oder Maschinen und dergleichen mehr.

Je nach Verwendung können hierbei neben Natur- und/oder Synthesekautschuk, gegebenenfalls in chemisch modifizierter Form, auch andere Elastomere, beispielsweise auf Polyurethanbasis, eingesetzt werden.

Auch die Grösse der Hartstoffpartikel sowie ihre Zusammensetzung wird vorteilhaft der Verwendung angepasst, ebenso das Mengenverhältnis zwischen Matrix und eingebetteten Partikeln.

Die maximale Grösse der Partikel wird, wie bereits erwähnt, durch die Dimensionen der bei der Verarbeitung verwendeten Vorrichtungen begrenzt. Die vorgesehene Verwendung kann weitere Grenzwerte setzen. Zu kleine Partikel mit einer Grösse von weniger als ca. 0,2 mm wirken nur noch als Füllstoff. Zu grosse Partikel führen zu ungleichmässigen Eigenschaften und beispielsweise bei Fahrzeugreifen zu erhöhter Geräuschentwicklung und verstärktem Verschleiss der Fahrbahn.

Die Grössen der Einzelpartikel im einzelnen Anwendungsfall sollten nicht zu unterschiedlich sein, weil kleine Partikel in Gegenwart erheblich grösserer Partikel keinen wesentlichen Beitrag zu der erfindungsgemässen Wirkung leisten. Es ist jedoch nicht erforderlich, dass alle Partikel gleich gross sind.

Das Mengenverhältnis zwischen Hartstoffpartikeln und Matrixmaterial wird vorteilhaft so gewählt, dass der Volumenanteil der Hartstoffpartikel zwischen 1 und 35% liegt. Der Volumenanteil bezieht sich dabei auf den tatsächlich mit den Hartstoffpartikeln durchsetzten Teil des Verbundmaterials, wenn die Partikel nicht gleichmässig im gesamten Material verteilt sind.

Bei Volumenanteilen unter 1% kommen zu wenig Partikel an die Oberfläche, um noch eine befriedigende Wirkung zeigen zu können, während bei Volumenanteilen über 35% die Elastizität des Materials stark herabgesetzt wird.

Vorzugsweise liegt der Volumenanteil der Hartstoffpartikel zwischen 5 und 20%, für die Laufflächenmischung von Fahrzeugreifen sind Anteile von 6 bis 12% besonders bevorzugt.

4

Je nach Anwendung kann es vorteilhaft sein, die Partikel entweder nur in den oberflächennahen Bereich des Gegenstandes zu bringen oder sie darin gleichmässig zu verteilen.

Für die Verwendung in Fahrzeugreifen sind Siliciumcarbidpartikel wegen der grossen Härte und des günstigen Preises besonders bevorzugt. Die Grösse der Partikel liegt dabei vorzugsweise zwischen 1 und 5 mm. Grössere Partikel bestehen bei Siliciumcarbid meistens aus mehreren Kristalliten und weisen daher eine geringere Festigkeit auf.

Die nachfolgenden Beispiele verdeutlichen die Ausführung der Erfindung.

Beispiel 1

(Vorbehandlung der Partikel nach Stand der Technik)

Siliciumcarbidkörner (Carsilon[R] 9899, LONZA Werke) wurden gemäss Beispiel 1 von EP-PS 0 082 816 abgerundet und anschliessend klassiert. Für die folgenden Beispiele wurde ein Korngrössenbereich von 1,55 bis 4,0 mm verwendet.

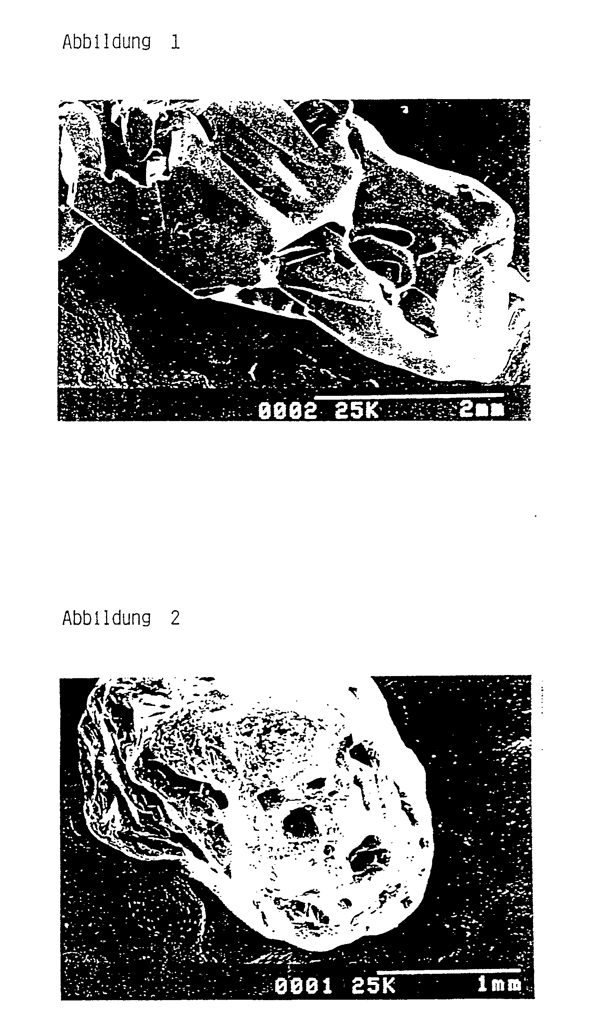

Die typische Partikelform des unbehandelten Siliciumcarbidkorns zeigt Abb.1, diejenige nach der Vorbehandlung ist in Abb.2 dargestellt. Die Aufnahmen zeigen deutlich die scharfen Kanten sowie die Vorsprünge und Vertiefungen des unbehandelten Korns und die grobe Abrundung durch die Vorbehandlung, die die festigkeitsvermindernden Vertiefungen und Poren im wesentlichen unverändert lässt.

Die Rundheit nach Krumbein der unbehandelten Partikel betrug ca. 0,1, die der behandelten lag im Bereich 0,2 bis 0,5.

Beispiel 2

In einem Attritor (Fa.Netsch, Typ PR15) wurden 7,2 kg der nach Beispiel 1 vorbehandelten Partikel mit 2 l Wasser vorgelegt. Die Partikel wurden insgesamt 28 h attritiert, wobei zur Entfernung des Abriebs nach 10 und 20 h das Wasser gewechselt wurde. Nach dem Ende des Attritiervorgangs wurden die Partikel mit Wasser gewaschen, bei 200°C getrocknet und die Partikel mit einer Grösse von weniger als 1,55 mm durch Sieben entfernt.

Die Ausbeute an Partikeln mit einer Grösse über 1,55 mm betrug durchschnittlich 60% der ursprünglichen Menge.

Die Rundheit nach Krumbein der so behandelten Partikel lag im wesentlichen im Bereich von 0,4 bis 0,7, Partikel mit einer Rundheit unter 0,3 waren nicht mehr vorhanden.

Beispiel 3

Eine Rührwerksmühle (Fa.Drais, Typ PM 12,5) wurde mit 20 kg der nach Beispiel 1 vorbehandelten Partikel und 50 l Wasser beschickt. Die Mühle wurde 3 h betrieben, wobei das Wasser kontinuierlich zwischen Vorratsbehälter und Mahlbehälter zirkuliert wurde. Anschliessend wurden die Partikel im Mahlbehälter mit frischem Wasser gewaschen. Die Trocknung und Siebung erfolgte wie in Beispiel 2.

Die Ausbeute an Partikeln über 1,55 mm betrug durchschnittlich ca. 55% der ursprünglichen Menge.

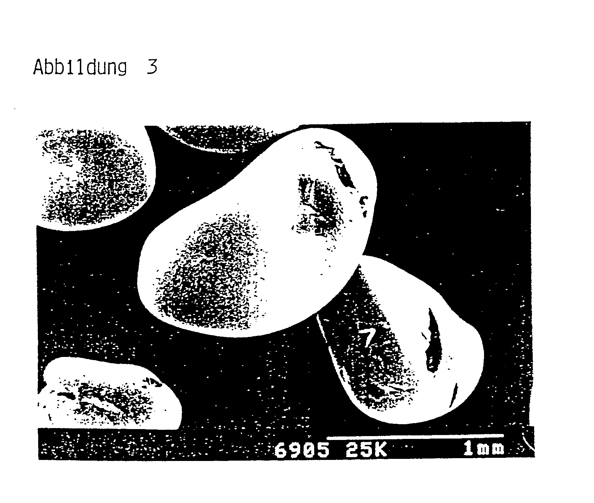

Die typische Partikelform nach der Behandlung nach Beispiel 2 oder 3 ist in Abb.3 dargestellt. Die Partikel erinnern in ihrer Form an Kartoffeln, sie besitzen keinerlei äussere Kanten, weisen eine matte, leicht aufgerauhte Oberfläche auf und lassen keine tiefen Löcher und Poren mehr erkennen.

Die Rundheit nach Krumbein der so behandelten Partikel lag im wesentlichen zwischen 0,5 und 0,8.

Beispiel 4

(Bestimmung der Druckfestigkeit)

Messmethode: In eine zylindrische Pressform, bestehend aus einer Matrize (Bohrungsdurchmesser 13,5 mm), einem festen Unterstempel und einem beweglichen Oberstempel, wurde eine definierte Menge (ca. 2 g) einer klassierten Siliciumcarbidkörnung (2,00 bis 2,36 mm) eingebracht und ca. 1 min gerüttelt, um eine dichte Kornschüttung zu erhalten. Nach Aufsetzen des Oberstempels wurde die Pressform in eine Festigkeitsprüfmaschine (Fa. Zwick, Universalprüfmaschine Typ 1478) eingesetzt und mit einer Vorschubgeschwindigkeit von 1 mm/min bis zu einer Endkraft von 0,8 kN bzw. 1,5 kN belastet. Nach Erreichen der Endkraft wurde der Vorschub abgeschaltet und der Druckabfall nach 1 min bestimmt. Als Mass für die Druckfestigkeit wurde der durch Sieben abtrennbare zerkleinerte Anteil (<2,00 mm) der Kornschüttung bestimmt.

Die Messergebnisse sind in Tabelle 1 zusammengefasst.

Gegenüber der Vorbehandlung nach dem Stand der Technik zeigt sich bei hohen Drücken eine erhebliche Reduktion des Anteils zerdrückter Partikel von 26 auf 15 Gew.%.

## Tabelle 1

| Probe | Enddruck [MPa] | Druckabfall [MPa] | zerkleinerter Anteil [Gew.%] |
|---|---|---|---|
| unbehandelt | 5,59 | 0,22 | 46,5 |
| nach Beispiel 1 | 5,59 | 0 | 0 |
| nach Beispiel 2 | 5,59 | 0 | 0 |
| nach Beispiel 1 | 10,48 | 0,27 | 26 |
| nach Beispiel 2 | 10,48 | 0,20 | 15 |

Beispiel 5

Analog zu Beispiel 3 wurden Siliciumcarbidkörnungen aus Carsilon[R] 9899 verschieden lang (2, 4 und 6 h) behandelt und analog zu Beispiel 4 auf ihre Druckfestigkeit untersucht. Abweichend von Beispiel 4 hatte die Pressmatrize einen Bohrungsdurchmesser von 29 mm, die Probemenge betrug jeweils 10 g und die Endkraft 20 kN. Ausserdem wurde jeweils die Schüttdichte für den Korngrössenbereich 1,55 bis 3,0 mm bestimmt.

Tabelle 2 zeigt die Messwerte im Vergleich mit unbehandelten und nach dem Stand der Technik (Beispiel 1) vorbehandelten Partikeln.

## Tabelle 2

| Probe | | Schüttdichte [kg/l] | zerkleinerter Anteil [Gew.%] |
|---|---|---|---|
| unbehandelt | | 1,50 | 64 |
| nach Beispiel 1 | | 1,59 | 59 |
| nach Beispiel 3 | 2 h | 1,87 | 31 |
| nach Beispiel 3 | 4 h | 1,88 | 27 |
| nach Beispiel 3 | 6 h | 1,89 | 23 |

Beispiel 6

(Beschichtung der Partikel)

Aus den gemäss Beispiel 3 behandelten Siliciumcarbidpartikeln wurde die Fraktion 1,55 bis 3,35 mm ausgesiebt und folgendermassen weiterbehandelt:

1. Zu 1 kg SiC-Partikeln wurden 57 g Chemosil[R] 211 (Henkel) gegeben, im Drehteller gleichmässig auf der Partikeloberfläche verteilt und mit Warmluft von ca. 80°C aufgetrocknet. Anschliessend wurden die Partikel durch ein Sieb (Maschenweite 4 mm) gestrichen, um eventuell entstandene Agglomerate zu zerstören.

2. Die SiC-Partikel wurden wieder in den Drehteller gebracht und analog zu Schritt 1 mit 136 g Chemosil[R] 221 (Henkel) beschichtet. Hierbei entstanden nach kurzer Antrocknung (ca. 5-10 min) grosse Agglomerate (ca. 2-10 cm Durchmesser). Diese Agglomerate wurden von der Oberfläche ausgehend mechanisch zerstört. Gleichzeitig wurden die Partikel durch Zufuhr von Warmluft abgetrocknet. Zur Kontrolle wurden die Partikel anschliessend nochmals durch ein Sieb (Maschenweite 4 mm) gestrichen.

3. Die SiC-Partikel wurden nochmals mit 300 g einer Kautschuklösung benetzt und anschliessend mit Warmluft (ca. 80° C) getrocknet.

Die Kautschuklösung bestand aus 15 Gew.% Kautschuk Typ V2/30 (Nuova Piovanelli Gomma, Milano) in Heptan/Toluol (je 50 Vol.%).

Zum Schluss wurden die SiC-Partikel nochmals durch ein Sieb (Maschenweite 4 mm) gestrichen.

Beispiel 7

(Herstellung der Fahrzeugreifen)

Die Laufflächenmischung (Typ V2/30, Nuova Piovanelli) wurde in einem wassergekühlten Kneter (T < 80° C) ca. 5 min homogenisiert und anschliessend in einen Kalander übergeführt. Im Kalander wurden dann die gemäss Beispiel 6 beschichteten Hartstoffpartikel in die Kautschukmasse eingearbeitet, d.h. durch mehrfaches Wiederholen des Kalandriervorgangs homogen verteilt. Anschliessend wurde das kalandrierte Band entsprechend der herzustellenden Reifengrösse zugeschnitten. Die Banddicke betrug ca. 8 mm, der Anteil der SiC-Partikel, bezogen auf die Kautschukmischung, ca. 8 Vol.%. Der zugeschnittene Streifen wurde auf einen für die Runderneuerung präparierten Grundreifen (Michelin) bei 150 ± 3° C und 12 ± 0,5 bar mit einer Haltezeit von 29 ± 0,5 min aufvulkanisiert. Hierbei wurde der Reifen von innen mit Druck beaufschlagt und gegen die starre Pressform gedrückt. Das Profil der Pressform und damit das erzeugte Laufflächenprofil war vom Typ Goodyear Ultragrip[R] 2. Der fertige Reifen wurde nun entweder über eine Strecke von 1000 bis 2000 km eingefahren oder an der Lauffläche mit einer Stahlkopfbürste behandelt, um die eingebetteten Hartstoffpartikel teilweise freizulegen, damit diese ihre Wirkung voll entfalten konnten.

Beispiele 8 - 13

(Verschleisstests)

Wie in Beispiel 7 beschrieben wurden Reifen der Grösse 175 R 14 hergestellt, deren Laufflächen jedoch nicht vorbehandelt wurden. Die Reifen wurden auf Stahlfelgen montiert, elektronisch ausgewuchtet und an der Antriebsachse eines Lieferwagens des Typs Renault Trafic Van[R] angebracht.

Mit diesem Fahrzeug wurde dann eine Strecke von ca. 12.000 km zurückgelegt, wobei überwiegend (ca. 70-80%) Autobahnen und Landstrassen benutzt wurden. Die maximale Fahrgeschwindigkeit betrug ca. 130 km/h und wurde jeweils über längere Strecken eingehalten.

Ein negativer Einfluss auf die Fahreigenschaften oder eine Zunahme der Abrollgeräusche wurde nicht beobachtet.

Nach 12.000 km Laufstrecke wurden die Reifen demontiert und der Verschleiss (Abnahme der Profiltiefe in mm) in der Reifenmitte an mehreren Stellen gemessen und gemittelt.

Die Verschleisstests wurden mit Reifen ohne Hartstoffpartikel (Beispiel 8 Vergleichsbeispiel) mit verschiedenen Hartstoffen ohne mechanische Vorbehandlung (Beispiele 9,11) mit durch ein Prallverfahren abgerundeten Partikeln (Beispiel 10) mit gemäss Beispiel 1 vorbehandelten (Beispiel 12) und mit erfindungsgemäss nach Beispiel 3 behandelten (Beispiel 13) Partikeln durchgeführt.

Alle verwendeten Hartstoffpartikel waren gemäss Beispiel 6 beschichtet und hatten eine Grösse von 1,55 bis 3,55 mm. Als Hartstoffpartikel wurden neben den in den Beispielen 1 und 2 genannten eingesetzt: Diadur[R] (Zirkonkorund, LONZA-Werke, Beispiel 9) und Abradux[R] T₁ (Normalkorund, LONZA, Beispiel 10).

Ausser der Profiltiefenabnahme wurde jeweils der Verschleiss der Hartstoffpartikel durch Inspektion der Lauffläche bestimmt. Hierzu wurden vier Verschleisstypen unterschieden:

Typ A:    Die Partikel sind intakt und ragen im unbelasteten Zustand teilweise aus der Profiloberfläche heraus.

Typ B:    Die Partikel sind intakt und schliessen in unbelastetem Zustand bündig mit der Profiloberfläche ab.

Typ C:    Die Partikel sind intakt, aber sie liegen tiefer als die Profiloberfläche. Bei rotierenden und belasteten Reifen kommen sie jedoch durch die Fliehkraft und die Nachgiebigkeit der

EP 0 461 469 A2

Kautschukmatrix an der Aufstandsfläche in direkten Fahrbahnkontakt.

Typ D: Die Partikel sind zertrümmert, die Fragmente sind teilweise in der Matrix gewandert oder herausgefallen.

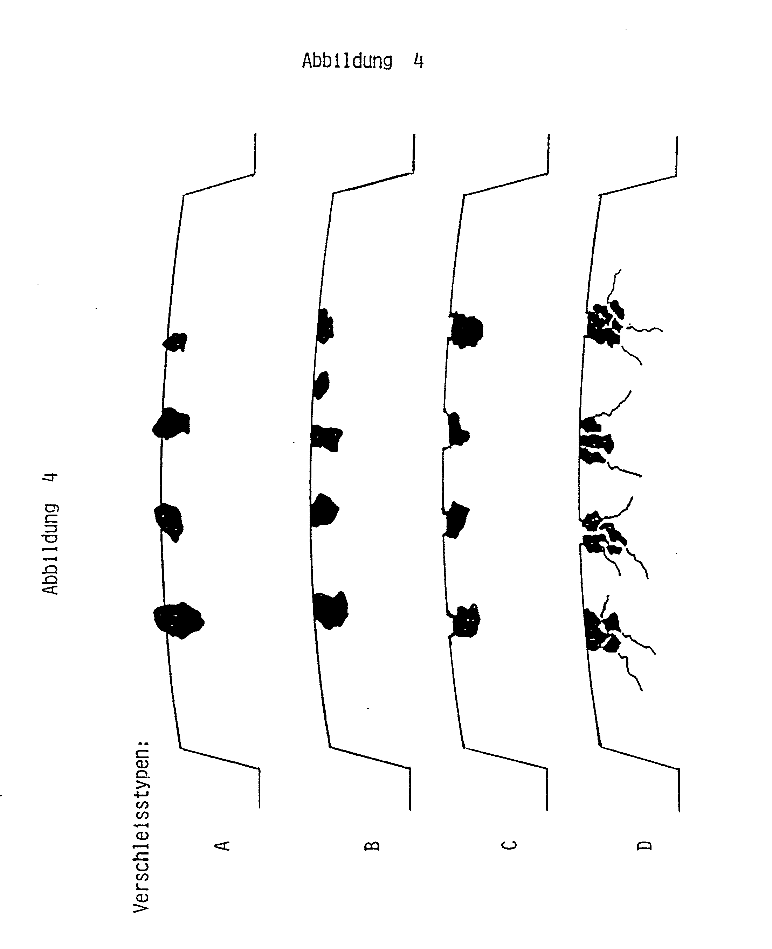

Die verschiedenen Verschleisstypen sind schematisch in Abb.4 dargestellt, die Testergebnisse sind in Tabelle 3 zusammengefasst.

## Tabelle 3

| Hartstoff | Profilabnahme [mm] | Verschleisstyp |
|---|---|---|
| --- | 1,6 ± 0,3 | --- |
| Diadur$^R$ | 1,4 ± 0,3 | B |
| Abradux$^R$ T$_1$ | 1,2 ± 0,3 | A, B |
| Carsilon$^R$ 9899 unbehandelt | 1,6 ± 0,3 | C, D |
| Carsilon$^R$ 9899 nach Beispiel 1 | 1,1 ± 0,3 | A, C, D |
| Carsilon$^R$ 9899 nach Beispiel 3 | 0,9 ± 0,3 | A |

Beispiele 14 - 16

(Fahrtests auf Eis)

Gemäss Beispiel 7 wurden Reifen der Grösse 155 R 13 mit unterschiedlichem Volumenanteil an nach Beispielen 3 und 6 behandelten Siliciumcarbidpartikeln hergestellt und auf alle vier Räder eines Fahrzeugs des Typs VW Golf CL montiert.

Nach einer Einfahrstrecke von jeweils 3.000 km wurden in einem Eisstadion folgende Tests durchgeführt: Es wurde eine Strecke in Form einer "8" markiert (Länge ca. 150 m, Breite ca. 7 m), die in der kürzestmöglichen Zeit durchfahren werden musste. Bestimmt wurde jeweils die Durchschnittszeit von 10 Runden. Die Temperatur des Eises betrug jeweils -5° C in 2 cm Tiefe.

Getestet wurden Reifen mit Volumenanteilen von 0% (Beispiel 14, Vergleichsbeispiel), 8% (Beispiel 15) und 12% (Beispiel 16) SiC-Partikeln in der Laufflächenmischung.

Die Ergebnisse der Fahrtests sind in Tabelle 4 zusammengefasst.

8

Tabelle 4

| Volumenanteil der SiC-Partikel [%] | Durchschnittszeit pro Runde [s] |
|---|---|
| 0 | 39 ± 2,4 |
| 8 | 34 ± 1,9 |
| 12 | 32 ± 1,9 |

Beispiel 17

(Verwendung von drucklos gesinterten runden Siliciumcarbidpartikeln)

Als Hartstoffpartikel wurden annähernd kugelförmige (Rundheit nach Krumbein ≥ 0,9) Partikel aus drucklos gesintertem Siliciumcarbid mit einem Durchmesser von 2 bis 2,36 mm verwendet.

Die Partikel wurden durch Granulation von ultrafeinem Siliciumcarbidpulver mit Sinterhilfsmitteln in einem Fliessbett-Sprüh-Granulator und anschliessendes druckloses Sintern in loser Schüttung hergestellt, sie sind bei der Fa. Sächsische Ingenieurkeramik GmbH, D-O-8273 Coswig, kommerziell erhältlich.

Die Schüttdichte der Partikel betrug 1,75 kg/l.

Eine Prüfung der Druckfestigkeit unter den in Beispiel 5 beschriebenen Bedingungen (Probemenge 10 g, Durchmesser 29 mm, Endkraft 20 kN) ergab einen zerkleinerten Anteil von nur 8 Gew.%.

Die Siliciumcarbidpartikel wurden analog zu den Beispielen 6 und 7 beschichtet und in Fahrzeugreifen eingearbeitet.

Analog zu den Beispielen 8 bis 13 wurden Verschleisstests durchgeführt. Die Profilabnahme nach 12.000 km Fahrstrecke betrug 0,9 ± 0,3 mm, der Verschleiss der Lauffläche war vom Typ A.

Beispiel 18

(Verwendung von gesinterten runden Siliciumnitridpartikeln)

Als Hartstoffpartikel wurden annähernd kugelförmige (Rundheit nach Krumbein ≥ 0,9) Partikel aus gesintertem Siliciumnitrid mit einem Durchmesser von ca. 2 mm verwendet. Die Partikel sind bei der FA. Nippon Kagoku Togyo Co., Ltd., Osaka, Japan, unter der Bezeichnung SUN-11 kommerziell erhältlich.

Die Schüttdichte der Partikel betrug 1,80 kg/l.

Bei einer Prüfung der Druckfestigkeit unter den in Beispiel 5 beschriebenen Bedingungen (Probemenge 10 g, Durchmesser 29 mm, Endkraft 20 kN) wurde keine Bildung von zerkleinertem Material festgestellt.

Die Sililciumnitridpartikel wurden analog zu den Beispielen 6 und 7 beschichtet und in Fahrzeugreifen eingearbeitet.

Analog zu den Beispielen 8 bis 13 wurden Verschleisstests durchgeführt. die Profilabnahme nach 12.000 km Fahrstrecke betrug 0,9 ± 0,3 mm, der beobachtete Verschleiss der Lauffläche war vom Typ A.

**Patentansprüche**

1. Verbundmaterial aus einer Elastomermatrix mit eingebetteten mit einem Haftvermittler beschichteten Hartstoffpartikeln, dadurch gekennzeichnet, dass die Hartstoffpartikel im wesentlichen frei von scharfen Ecken und Kanten und festigkeitsmindernden Gefügefehlern sind und wenigstens 90% der Gesamtmasse der Hartstoffpartikel auf Partikel mit einer Rundheit nach Krumbein von wenigstens 0,3 entfallen.

2. Verbundmaterial nach Patentanspruch 1, dadurch gekennzeichnet, dass wenigstens 80% der Gesamtmasse der Hartstoffpartikel auf Partikel mit einer Rundheit nach Krumbein von wenigstens 0,5 entfallen.

3. Verbundmaterial nach Patentanspruch 1 oder 2, dadurch gekennzeichnet, dass der Volumenanteil der Haftstoffpartikel am Gesamtvolumen 1 bis 35%, z.B. 5 bis 20%, beträgt.

4. Verbundmaterial nach einem oder mehreren der Patentansprüche 1 bis 3, dadurch gekennzeichnet, dass die Elastomermatrix aus einem Elastomer auf Basis von Natur- und/oder Synthesekautschuk, gegebenenfalls unter Zusatz üblicher Füll- und Hilfsstoffe, gebildet wird.

5. Verbundmaterial nach einem oder mehreren der Patentansprüche 1 bis 4, dadurch gekennzeichnet, dass die Hartstoffpartikel aus Oxiden, Carbiden, Nitriden oder Boriden von Metallen oder Halbmetallen oder Mischungen solcher Verbindungen untereinander oder mit Metallen, z.B. aus Siliciumcarbid, Siliciumnitrid, Korund und/oder Zirkonorund, bestehen.

6. Verbundmaterial nach einem oder mehreren der Patentansprüche 1 bis 5, dadurch gekennzeichnet, dass die Hartstoffpartikel aus Siliciumcarbid bestehen und die mittlere Partikelgrösse 0,2 bis 5 mm beträgt.

7. Verbundmaterial nach einem oder mehreren der Patentansprüche 1 bis 6, dadurch gekennzeichnet, dass die Haftvermittler-Beschichtung aus wenigstens zwei Schichten besteht.

8. Verwendung des Verbundmaterials nach einem oder mehreren der Patentansprüche 1 bis 7 zur Übertragung von Reibungskräften.

9. Verwendung des Verbundmaterials nach einem oder mehreren der Patentansprüche 1 bis 8 in der Lauffläche von Fahrzeugreifen, insbesondere für den Gebrauch auf nassen und/oder glatten Fahrbahnen.

10. Verfahren zur Herstellung von abgerundeten druckfesten Hartstoffpartikeln, dadurch gekennzeichnet, dass Hartstoffpartikel beliebiger Form in einem flüssigen Medium so lange einer kombinierten Reib- und Schlagbeanspruchung, z.B. durch Behandlung in einer Rührwerksmühle, einer Ringspaltmühle oder einem Attritor, unterworfen werden, bis sie im wesentlichen frei von scharfen Ecken und Kanten und festigkeitsmindernden Gefügefehlern sind und wenigstens 90% der Gesamtmasse der Partikel eine Rundheit nach Krumbein von wenigstens 0,3 aufweisen.

11. Verfahren nach Patentanspruch 10, dadurch gekennzeichnet, dass bei der Behandlung in der Rührwerksmühle, der Ringspaltmühle oder dem Attritor neben den zu behandelnden Hartstoffpartikeln keine zusätzlichen Mahlkörper eingesetzt werden.

12. Verfahren nach einem oder mehreren der Ansprüche 10 bis 11, dadurch gekennzeichnet, dass als flüssiges Medium Wasser eingesetzt wird.

13. Verfahren nach einem oder mehreren der Ansprüche 9 bis 12, dadurch gekennzeichnet, dass als Ausgangsmaterial solche Hartstoffpartikel eingesetzt werden, die bereits auf andere Weise teilweise abgerundet worden sind.

14. Abgerundete druckfeste Hartstoffpartikel, erhältlich nach dem Verfahren gemäss mindestens einem der Patentansprüche 10 bis 13.

15. Hartstoffpartikel nach Patentanspruch 14, dadurch gekennzeichnet, dass sie aus Oxiden, Carbiden, Nitriden oder Boriden von Metallen oder Halbmetallen oder Mischungen solcher Verbindungen untereinander oder mit Metallen, z.B. aus Siliciumcarbid, Siliciumnitrid, Korund und/oder Zirkonkorund, bestehen.

16. Hartstoffpartikel nach Patentanspruch 15, dadurch gekennzeichnet, dass sie aus Siliciumcarbid bestehen und eine mittlere Grösse von 0,2 bis 5 mm besitzen.

17. Verwendung der Hartstoffpartikel nach einem oder mehreren der Patentansprüche 15 bis 16 zur Herstellung von Verbundmaterialien mit Elastomermatrix.

Abbildung 1

Abbildung 2

Abbildung 3

Abbildung 4

Verschleisstypen:

A

B

C

D

Abbildung 4